# EUROPEAN PATENT SPECIFICATION

(11) **EP 4 214 646 B1**
(45) Date of publication and mention of the grant of the patent: **09.12.2026**
(21) Application number: 21777294.6
(22) Date of filing: 10.09.2021
(51) Int. Cl.: G06N 10/00, H04B 10/50

(54) **OPTICALLY MULTIPLEXED QUANTUM CONTROL**
OPTISCH MULTIPLEXIERTE QUANTENSTEUERUNG
COMMANDE QUANTIQUE À MULTIPLEXAGE OPTIQUE

(30) Priority: 15.09.2020 US 202017021683
(43) Date of publication of application: 26.07.2023
(73) Proprietor: International Business Machines Corporation, Armonk, New York 10504 (US)
(72) Inventor: RITTER, Mark, Yorktown Heights, New York 10598 (US); ORCUTT, Jason, Yorktown Heights, New York 10598 (US); GUMANN, Patryk, Yorktown Heights, New York 10598 (US)
(74) Representative: IBM Deutschland GmbH
(86) International application number: PCT/EP2021/075023
(87) International publication number: WO 2022/058254

(56) References cited:
- WO-A1-2020/088297
- WO-A1-2020/154745
- US-B2- 7 127 168
- US-B2- 8 718 466
- LECOCQ F ET AL: "Control and readout of a superconducting qubit using a photonic link", ARXIV.ORG, CORNELL UNIVERSITY LIBRARY, 201 OLIN LIBRARY CORNELL UNIVERSITY ITHACA, NY 14853, 2 September 2020 (2020-09-02), XP081754133

## Description

### BACKGROUND

The currently claimed embodiments of the present invention relate to quantum computation, and more specifically, to a qubit control system for a quantum computer and a method of controlling qubits in a quantum computer.

One building block in quantum computing is to be able to prepare qubits in specific quantum states. Qubits in a superconducting quantum computer are usually controlled using radio frequency energy. The radio frequency is delivered via a radio frequency line to a resonator which in turn interacts with the qubit to control the quantum states of the qubit.

The number of control radio frequency lines can scale with the number of qubits in a quantum computer. At very large numbers of qubits, the number of radio frequency lines can become also very large. In order to reduce the number of lines used, it may be desirable to employ multiplexers and demultiplexers to be able to send a plurality of radio frequency energy signals to the plurality of qubits. However, even when using multiplexers and demultiplexers to transmit radio frequency energy signals, a problem remains that these types of systems are bulky, and more importantly introduce heat and associated noise into the superconducting environment of the qubits. Therefore, it is desirable to solve this and other problems of existing signal transport techniques.

WO 2020/154745 A1discloses a quantum computing system includes a cryostat to support a low-temperature vacuum environment during operation of the quantum computing system. A quantum processor is positioned in the cryostat. A first electronic control module is external to the cryostat and a second electronic control module is within the cryostat. At least one optical transmission line connecting the first electronic control module is external to the cryostat with the second electronic control module internal to the cryostat, the optical transmission line being configured to transmit optical signals to and from the second electronic control module during operation of the quantum computing system. A plurality of signal lines connect the second electronic control module with the quantum processor, a first subset of the signal lines being configured to transmit microwave signals to and from the quantum processor during operation of the quantum computing system.

### SUMMARY

An aspect of the present invention is to provide a qubit control system according to claim 1 of the appended set of claims.

In an embodiment, the radio frequency multiplexer/demultiplexer is configured to receive at least two recovered qubit control signals that are different RF wavelengths from the demodulator and to multiplex the at least two recovered qubit control signals onto one of the plurality of spatially separated qubit-control waveguides.

In an embodiment, the qubit control system further includes a plurality of radio frequency multiplexers/demultiplexers each configured to receive at least two recovered qubit control signals that are different RF wavelengths from the demodulator and to multiplex the at least two recovered qubit control signals onto a corresponding one of the plurality of spatially separated qubit-control waveguides.

In an embodiment, the radio frequency multiplexer/demultiplexer includes a plurality of bandpass filters each allowing a corresponding one recovered qubit control signal to pass while attenuating or substantially blocking all other recovered qubit control signals. The demodulator includes a direct optical to electrical converter.

Another aspect of the present invention is to provide, as defined in claim 5 of the appended set of claims, a quantum computer including a refrigeration system having a temperature-controlled vessel; a quantum processor disposed within the temperature-controlled vessel, the quantum processor including a plurality of superconducting qubits; and a qubit control system as described above, said qubit control system having a portion exterior to the temperature-controlled vessel and a portion extending into the temperature-controlled vessel to provide control of the plurality of superconducting qubits.

In an embodiment, the source of the plurality optical carriers, the optical modulator, and the optical multiplexer are all disposed external to the temperature-controlled vessel. In an embodiment, the optical demultiplexer and the demodulator are disposed within the temperature-controlled vessel. In an embodiment, the optical waveguide extends from the optical multiplexer that is disposed external to the temperature-controlled vessel into the temperature-controlled vessel to the optical demultiplexer. In an embodiment, the plurality of qubit control signals and corresponding the plurality of recovered qubit control signals are in radio frequency (RF) wavelength ranges corresponding to an excitation energy of a corresponding qubit to be controlled.

In an embodiment, the quantum computer further includes a radio frequency multiplexer configured to receive at least two recovered qubit control signals that are different RF wavelengths from the demodulator and to multiplex the at least two recovered qubit control signals onto one of the plurality of spatially separated qubit-control waveguides. In an embodiment, the quantum computer also includes a plurality of radio frequency multiplexers each configured to receive at least two recovered qubit control signals that are different RF wavelengths from the demodulator and to multiplex the at least two recovered qubit control signals onto a corresponding one of the plurality of spatially separated qubit-control waveguides.

In an embodiment, the radio frequency multiplexer includes a plurality of bandpass filters each allowing a corresponding one recovered qubit control signal to pass while attenuating or substantially blocking all other recovered qubit control signals. In an embodiment, the demodulator includes a direct optical to electrical detector. In an embodiment, the refrigeration system further includes a second temperature-controlled vessel to be controlled at a temperature higher than a temperature in the first-mention temperature-controlled vessel. At least one of the optical multiplexer from the source of the plurality optical carriers, the optical modulator, and the optical multiplexer is disposed in the second temperature-controlled vessel.

In an embodiment, the source of the plurality optical carriers, the optical modulator, and the optical multiplexer are all disposed in the second temperature-controlled vessel. In an embodiment, the refrigeration system further includes a second temperature-controlled to be controlled at a temperature higher than a temperature in the first-mention temperature-controlled vessel. In an embodiment, the optical demultiplexer and the demodulator are disposed in the second temperature-controlled vessel.

Another aspect of the present invention is to provide a method of controlling qubits according to claim 10 of the appended set of claims.

In an embodiment, the modulating and the multiplexing are performed at a higher temperature than the demultiplexing, the demodulating, the coupling and the directing. The plurality of qubits is a plurality of superconducting qubits and at least one of the demultiplexing, the demodulating, the coupling and the directing is performed at an operating temperature of the plurality of superconducting qubits. In an embodiment, each of the plurality of superconducting qubits has a control signal in a radio frequency (RF) spectral range, the qubit-control waveguides being RF waveguides.

In an embodiment, the demultiplexing the plurality of modulated optical signals from the wavelength division multiplexed optical signal includes band-pass filtering the wavelength division multiplexed optical signal for each of a plurality of pass bands to provide a plurality of demultiplexed modulated optical signals at each of a plurality of optical channels.

In an embodiment, the demodulating the plurality of qubit control signals from the plurality of modulated optical signals includes direct optical detection of each of the plurality of demultiplexed modulated optical signals to provide a corresponding plurality of demodulated electrical signals in the RF spectral range.

In an embodiment, the demodulating the plurality of qubit control signals from the plurality of modulated optical signals includes direct optical detection to provide a corresponding plurality of demodulated electrical signals in the RF spectral range. In an embodiment, the demodulating, the coupling and the directing are performed at an operating superconducting temperature of the plurality of superconducting qubits.

### BRIEF DESCRIPTION OF THE DRAWINGS

The present disclosure, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the invention.
FIG. 1 is schematic diagram of a qubit control system for a quantum computer, according to an embodiment of the present invention;
FIG. 2 is a schematic diagram of the quantum computer, according to an embodiment of the present invention; and
FIG. 3 is a flow chart of a method of controlling qubits in a quantum computer, according to an embodiment of the present invention.

### DETAILED DESCRIPTION

In the following paragraphs, the terms "light" and "optical" are intended to be general to include both visible and non-visible portions of the electromagnetic spectrum such as, but not limited to, visible light, infrared light, near infrared light and ultraviolet light. The term "subset of a plurality of qubits" is intended to include any integer number including a single qubit or any plurality of qubits.

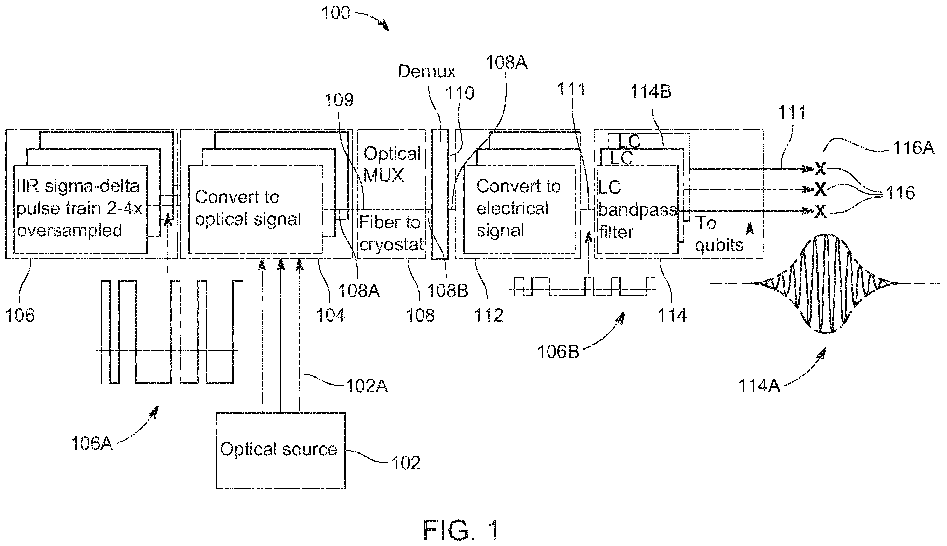

FIG. 1 is schematic diagram of a qubit control system 100 for a quantum computer (not shown), according to an embodiment of the present invention. The qubit control system 100 includes an optical source 102 of a plurality optical carriers 102A, each optical carrier being a different wavelength of light. In an embodiment, the optical source 102 can include, for example, a plurality of lasers such as Fabry Perot gain medium lasers. For example, lasers having quantum dot active regions can be used to generate appropriately spaced optical wavelengths in a single optical fiber. These sources are suitable for generating a plurality of laser lines (e.g., 8 to 32 laser lines) in a relatively narrow optical wavelength range. For example, a quantum dot-based diode laser operating as an optical frequency comb generator can be used. The quantum dot-based laser can be coupled to an optical fiber to provide for example several low noise 80 GHz spaced optical modes at about, for example, 1310 nm.

The qubit control system 100 also includes an optical modulator 104 configured to receive the plurality optical carriers 102A and to modulate each optical carrier 102A with a qubit control signal 106A generated by a qubit control signal source 106 to provide a plurality of modulated optical signals 108A.

The qubit control system 100 also includes an optical multiplexer (MUX) 108 configured to receive the plurality of modulated optical signals 108A and provide a wavelength division multiplexed optical signal 108B. The qubit control system 100 also includes an optical waveguide 109 optically coupled to the optical multiplexer to receive and transmit the wavelength division multiplexed optical signal therethrough.

The qubit control system 100 further includes an optical demultiplexer (DEMUX) 110 optically coupled to the optical waveguide 109 to receive the wavelength division multiplexed optical signal 108B after being transmitted through the optical waveguide 109 to recover each of the plurality of modulated optical signals 108A.

The qubit control system 100 also includes a demodulator 112 optically coupled to the optical demultiplexer 110 to receive each of the recovered plurality of modulated optical signals 108A to output a corresponding plurality of recovered qubit control signals 106B. In an embodiment, the plurality of recovered qubit control signals 106B are substantially similar or equivalent to the qubit control signal 106A.

The qubit control system 100 further includes a plurality of spatially separated qubit-control waveguides 111 each configured to receive at least one of the plurality of recovered qubit control signals 106B such that equivalent recovered qubit control signals 106B are spatially divided into different spatially separated qubit-control waveguides 111.

The qubit control system 100 is configured to control a plurality of superconducting qubits 116 by qubit control signals 106A delivered by the plurality of spatially separated qubit-control waveguides 111. Each of the plurality of spatially separated qubit-control waveguides 111 directs qubit control signals 106B to a different subset 116A of the plurality of superconducting qubits 116 Although a single qubit is shown as being the subset of qubits 116A of the plurality of superconducting qubits 116, it must be appreciated that one, two or more can form the subset of qubits 116A of the plurality of superconducting qubits 116.

The qubit control system 100 further includes a radio frequency multiplexer/demultiplexer 114 including one or more bandpass filters 114B configured to receive the plurality of recovered qubit control signals 106B transmitted via the spatially separated qubit-control waveguides 111 and output frequency filtered recovered qubit control signals 114A which are used to control the corresponding subset 116A of the plurality of superconducting qubits 116.

The plurality of qubit control signals 106A and corresponding plurality of recovered qubit control signals 106B are in radio frequency (RF) wavelength ranges corresponding to an excitation energy of a corresponding qubit 116A to be controlled.

In an embodiment, the qubit control system 100 further includes the radio frequency multiplexer/demultiplexer 114 configured to receive at least two recovered qubit control signals 106B that are different RF wavelengths from the demodulator 112 and to multiplex the at least two recovered qubit control signals 106B onto one of the plurality of spatially separated qubit-control waveguides 111.

In an embodiment, the qubit control system 100 also includes a plurality of radio frequency multiplexers/demultiplexers 114, each radiofrequency multiplexer/demultiplexer 114 is configured to receive at least two recovered qubit control signals 106B that are different RF wavelengths from the demodulator 112 and to multiplex the at least two recovered qubit control signals 106B onto a corresponding one of the plurality of spatially separated qubit-control waveguides 111.

In an embodiment, the radio frequency multiplexer 114 includes a plurality of bandpass filters 114B, each of the plurality of bandpass filters 114B allowing a corresponding one of the recovered qubit control signals 106B to pass while attenuating or substantially blocking all other recovered qubit control signals 106B. Each bandpass filter 114B includes a LC circuit to provide a LC bandpass filter.

The demodulator 112 includes a direct optical to electrical converter. In an embodiment, the optical to electrical converter can include for example an optical detector or photodetector such as a photodiode, a photomultiplier, or a bolometric scale (SC).

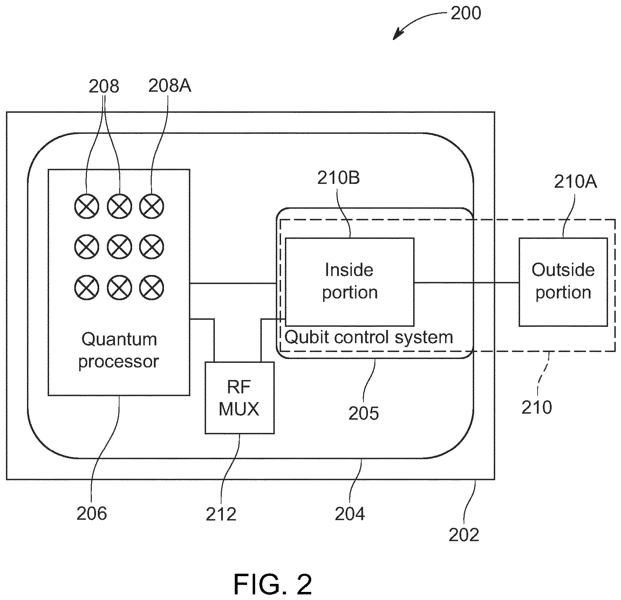

Another aspect of the present invention is to provide a quantum computer 200. FIG. 2 is a schematic diagram of the quantum computer, according to an embodiment of the present invention. The quantum computer 200 includes a refrigeration system 202 including a temperature-controlled vessel 204 and a quantum processor 206 disposed within the temperature-controlled vessel 204. The quantum processor 206 includes a plurality of superconducting qubits 208. The quantum computer 200 also includes a qubit control system 210 having a portion 210A exterior to the temperature-controlled vessel 204 and a portion 210B extending into the temperature-controlled vessel 204 to provide control of the plurality of superconducting qubits 208.

The qubit control system 210 is similar to the qubit control system 100 described in the above paragraphs with respect to FIG. 1. Therefore, in referring to components of the qubit control system 210, similar components of the qubit control system 100 are referred to instead. Therefore, further referring to FIG. 1, the qubit control system 210 includes the optical source 102 of a plurality optical carriers 102A, each optical carrier 102A being a different wavelength of light. The qubit control system 210 also includes the optical modulator 104 configured to receive the plurality optical carriers 102A and to modulate each optical carrier 102A with a qubit control signal 106A to provide the plurality of modulated optical signals 108A.

The qubit control system 210 also has an optical multiplexer 108 configured to receive the plurality of modulated optical signals 108A and provide the wavelength division multiplexed optical signal 108B. The qubit control system 210 also includes the optical waveguide 109 optically coupled to the optical multiplexer to receive and transmit the wavelength division multiplexed optical signal therethrough.

The qubit control system 210 further includes an optical demultiplexer 110 optically coupled to the optical waveguide 109 to receive the wavelength division multiplexed optical signal 108B after being transmitted through the optical waveguide 109 to recover each of the plurality of modulated optical signals 108A.

The qubit control system 210 also includes the demodulator 112 optically coupled to the optical demultiplexer 110 to receive each of the recovered plurality of modulated optical signals 108A to output corresponding plurality of recovered qubit control signals 106B.

The qubit control system 100 further includes the plurality of spatially separated qubit-control waveguides 111 each configured to receive at least one of the plurality of recovered qubit control signals 106B such that equivalent recovered qubit control signals 106B are spatially divided into different spatially separated qubit-control waveguides 111.

The plurality of superconducting qubits 208 are configured to be controlled by qubit control signals delivered by the plurality of spatially separated qubit-control waveguides. Each of the plurality of spatially separated qubit-control waveguides 111 directs qubit control signals to a different subset 208A of the plurality of superconducting qubits 208. In an embodiment, each of the plurality of spatially separated qubit-control waveguides 111 directs qubit control signals to a different subset of the plurality of superconducting qubits 208.

In an embodiment, the optical source 102 of the plurality optical carriers 102A, the optical modulator 104, and the optical multiplexer 108 are all disposed external to the temperature-controlled vessel 204. In an embodiment, the optical demultiplexer 110 and the demodulator 112 are disposed within the temperature-controlled vessel 204. The optical waveguide 109 extends from the optical multiplexer 108 that is disposed external to the temperature-controlled vessel 204 into the temperature-controlled vessel 204 to the optical demultiplexer 110.

The plurality of qubit control signals 106A and corresponding the plurality of recovered qubit control signals 106B are in radio frequency (RF) wavelength ranges corresponding to an excitation energy of a corresponding qubit 208A to be controlled.

In an embodiment, the quantum computer 200 further includes a radio frequency multiplexer 212 configured to receive at least two recovered qubit control signals 106B that are different RF wavelengths from the demodulator 112 and to multiplex the at least two recovered qubit control signals 106B onto one of the plurality of spatially separated qubit-control waveguides 111. The radiofrequency multiplexer 212 can be similar to the radiofrequency multiplexer 114 shown in FIG. 1 and described in the above paragraphs.

The quantum computer 200 further includes a plurality of radio frequency multiplexers 212, each configured to receive at least two recovered qubit control signals 106B that are different RF wavelengths from the demodulator 112 and to multiplex the at least two recovered qubit control signals 106B onto a corresponding one of the plurality of spatially separated qubit-control waveguides 111.

In an embodiment, the radio frequency multiplexer 212 includes a plurality of bandpass filters such as bandpass filters 114B of radio frequency multiplexer 114, each of the plurality of bandpass filters allowing a corresponding one of the recovered qubit control signals 106B to pass while attenuating or substantially blocking all other recovered qubit control signals 106B. In an embodiment, the bandpass filter can include a LC circuit to form a LC bandpass filter.

In an embodiment, the refrigeration system 202 further includes a second temperature-controlled vessel 205 to be controlled at a temperature higher than a temperature in the first-mention temperature-controlled vessel 204. In an embodiment, the interior portion 210B of the qubit control system 210 includes the optical multiplexer 108, the optical modulator 104, and the optical demultiplexer 110 and is disposed in the second temperature-controlled vessel 205.

In another embodiment, the optical source 102 of the plurality of optical carriers 102A, the optical modulator 104, and the optical multiplexer 108 can also be disposed in the second temperature-controlled vessel 205. In an embodiment, the second temperature-controlled vessel 205 is controlled at a temperature higher than a temperature in the first-mention temperature-controlled vessel 204 where the quantum processor 206 is located. In an embodiment, the optical demultiplexer 110 and the demodulator 112 can also be disposed in the second temperature-controlled vessel 205 instead of the first-mention temperature-controlled vessel 204. In an embodiment, the optical demultiplexer 110, and the demodulator 112 are all disposed in the second temperature-controlled vessel 205.

Although the second temperature-controlled vessel 205 is shown inside the first-mentioned temperature-controlled vessel 204, the second temperature-controlled vessel 205 can also be located outside the first-mentioned temperature-controlled vessel 204. In addition, in another embodiment, the second temperature-controlled vessel 205 can also be a portion or zone of the first mentioned temperature-controlled vessel 204 where the temperature is higher than a portion or zone of the first mentioned temperature-controlled vessel 204 where the quantum processor 206 is located or disposed. In an embodiment, the quantum processor 206 and associated superconducting qubits 208, 116 operate at superconducting temperatures. The qubits 116 and 208 are superconducting qubits.

In other embodiments, more than two temperature control vessels can be used without limitation as to the particular number. Furthermore, components of the qubit control system can be arranged in many ways distributed among the more than two temperature control vessel in various embodiments.

One benefit of using such a qubit control system 100, 210 is the ability to provide more signals/fiber than is possible when using multiplexed signals radio frequency (RF) coax because wavelength division multiplexing (WDM) allows same modulation frequency RF to be transmitted on different optical wavelengths. Another benefit is that highfrequency Finite Impulse Response (FIR) and Infinite Impulse Response (IIR) modulation can be performed at room temperature in the optical domain or in an environment where the temperature is higher than a temperature of the quantum processor/qubits are located. Another benefit is that the relatively small signal path at low-temperature for the signals before being filtered enables the elimination of active electronics in cryostat thus reducing heat dissipation. Instead, a passive LC filter, photodetector/converter can be used within the cryostat.

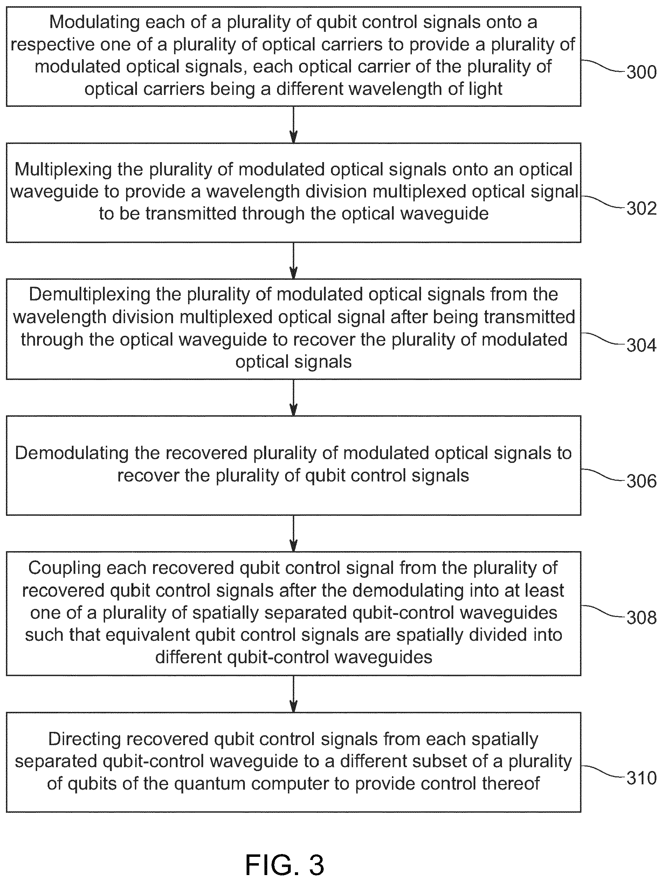

Another aspect of the present invention is to provide a method of controlling qubits in a quantum computer, as defined in claim 10 of the appended set of claims. FIG. 3 is a flow chart of a method of controlling qubits in a quantum computer, according to an embodiment of the present invention. The method includes modulating each of a plurality of qubit control signals onto a respective one of a plurality of optical carriers to provide a plurality of modulated optical signals, each optical carrier of the plurality of optical carriers being a different wavelength of light, at 300; multiplexing the plurality of modulated optical signals onto an optical waveguide to provide a wavelength division multiplexed optical signal to be transmitted through the optical waveguide, at 302; demultiplexing the plurality of modulated optical signals from the wavelength division multiplexed optical signal after being transmitted through the optical waveguide to recover the plurality of modulated optical signals, at 304; demodulating the recovered plurality of modulated optical signals to recover the plurality of qubit control signals, at 306; coupling each recovered qubit control signal from the plurality of recovered qubit control signals after the demodulating into at least one of a plurality of spatially separated qubit-control waveguides such that equivalent qubit control signals are spatially divided into different qubit-control waveguides, at 308; and directing recovered qubit control signals from each spatially separated qubit-control waveguide to a different subset of a plurality of superconducting qubits comprised in a quantum processor comprised in the quantum computer to provide control thereof, at 310.

In an embodiment, the modulating and the multiplexing are performed at a higher temperature than the demultiplexing, the demodulating, the coupling and the directing. In an embodiment, at least one of the demultiplexing, the demodulating, the coupling and the directing is performed at an operating temperature of the plurality of superconducting qubits. In an embodiment, each of the plurality of superconducting qubits has a control signal in a radio frequency (RF) spectral range, the qubit-control waveguides being RF waveguides.

In an embodiment, demultiplexing the plurality of modulated optical signals from the wavelength division multiplexed optical signal includes band-pass filtering the wavelength division multiplexed optical signal for each of a plurality of pass bands to provide a plurality of demultiplexed modulated optical signals at each of a plurality of optical channels.

In an embodiment, the demodulating the plurality of qubit control signals from the plurality of modulated optical signals includes direct optical detection of each of the plurality of demultiplexed modulated optical signals to provide a corresponding plurality of demodulated electrical signals in the RF spectral range.

In an embodiment, the demodulating the plurality of qubit control signals from the plurality of modulated optical signals includes direct optical detection to provide a corresponding plurality of demodulated electrical signals in the RF spectral range.

The descriptions of the various embodiments of the present invention have been presented for purposes of illustration, but are not intended to be exhaustive or limited to the embodiments. The terminology used herein was chosen to best explain the principles of the embodiments, the practical application or technical improvement over technologies found in the marketplace, or to enable others of ordinary skill in the art to understand the embodiments disclosed herein.

## Claims

1. A qubit control system (100) for a quantum computer (200), the quantum computer (200) comprising a quantum processor (206), the quantum processor (206) comprising a plurality of superconducting qubits (116, 208), the qubit control system (100) comprising:
a source of a plurality of optical carriers (102A), each optical carrier being a different wavelength of light;
an optical modulator (104) configured to receive said plurality of optical carriers (102A) and to modulate each optical carrier with a qubit control signal (106A) to provide a plurality of modulated optical signals (108A);
an optical multiplexer (108) configured to receive said plurality of modulated optical signals (108A) and provide a wavelength division multiplexed optical signal (108B);
an optical waveguide (109) optically coupled to said optical multiplexer (108) to receive and transmit said wavelength division multiplexed optical signal (108B) therethrough;
an optical demultiplexer (110) optically coupled to said optical waveguide (109) to receive said wavelength division multiplexed optical signal (108B) after being transmitted through said optical waveguide (109) to recover each of said plurality of modulated optical signals (108A);
a demodulator (112) optically coupled to said optical demultiplexer (110) to receive each of said recovered plurality of modulated optical signals (108A) to output a corresponding plurality of recovered qubit control signals (106B), wherein the demodulator (112) comprises a direct optical to electrical converter;
a plurality of spatially separated qubit-control waveguides (111) each configured to receive at least one of said plurality of recovered qubit control signals (106B) such that equivalent recovered qubit control signals (106B) are spatially divided into different spatially separated qubit-control waveguides (111),
wherein each of said plurality of spatially separated qubit-control waveguides (111) directs recovered qubit control signals (106B) to a different subset (116A) of the plurality of superconducting qubits (116, 208), and
wherein said plurality of qubit control signals (106A) and corresponding said plurality of recovered qubit control signals (106B) are in radio frequency (RF) wavelength ranges corresponding to an excitation energy of a corresponding qubit to be controlled,
the qubit control system (100) further comprising a radio frequency multiplexer/demultiplexer (114) including one or more bandpass filters (114B), the radio frequency multiplexer/demultiplexer (114) being configured to receive the plurality of recovered qubit control signals (106B) transmitted via the spatially separated qubit-control waveguides (111) and to output frequency filtered recovered qubit control signals (114A) which are used to control the corresponding subset (116A) of the plurality of superconducting qubits (116, 208),
wherein each of the one or more bandpass filters (114B) includes an LC circuit to provide an LC bandpass filter.

2. The qubit control system according to claim 1, wherein the radio frequency multiplexer/demultiplexer (114) is configured to receive at least two recovered qubit control signals (106B) that are different RF wavelengths from said demodulator (112) and to multiplex said at least two recovered qubit control signals (106B) onto one of said plurality of spatially separated qubit-control waveguides (111).

3. The qubit control system according to claim 1, further comprising a plurality of radio frequency multiplexers/demultiplexers (114), each configured to receive at least two recovered qubit control signals (106B) that are different RF wavelengths from said demodulator (112) and to multiplex said at least two recovered qubit control signals (106B) onto a corresponding one of said plurality of spatially separated qubit-control waveguides (111).

4. The qubit control system according to claim 2, wherein said radio frequency multiplexer/demultiplexer (114) comprises a plurality of bandpass filters (114B) each allowing a corresponding one recovered qubit control signal (106B) to pass while attenuating or substantially blocking all other recovered qubit control signals (106B).

5. A quantum computer comprising:
a refrigeration system (202) comprising a temperature-controlled vessel (204);
a quantum processor (206) disposed within said temperature-controlled vessel (204), said quantum processor (206) comprising a plurality of superconducting qubits (116, 208); and
a qubit control system (210) according to any of the preceding claims having a portion (210A) exterior to said temperature-controlled vessel (204) and a portion (210B) extending into said temperature-controlled vessel (204) to provide control of said plurality of superconducting qubits (116, 208).

6. The quantum computer according to the preceding claim, wherein said source of said plurality of optical carriers (102A), said optical modulator (104), and said optical multiplexer (108) are all disposed external to said temperature-controlled vessel (204),
wherein said optical demultiplexer (110) and said demodulator (112) are disposed within said temperature-controlled vessel (204), and
wherein said optical waveguide (109) extends from said optical multiplexer (108) that is disposed external to said temperature-controlled vessel (204) into said temperature-controlled vessel (204) to said optical demultiplexer (110).

7. The quantum computer according to the preceding claim, wherein said refrigeration system (202) further comprises a second temperature-controlled vessel (205) to be controlled at a temperature higher than a temperature in the temperature-controlled vessel (204), and
wherein at least one of said source of said plurality of optical carriers (102A), said optical modulator (104), and said optical multiplexer (108) is disposed in said second temperature-controlled vessel (205).

8. The quantum computer according to the preceding claim, wherein said source of said plurality of optical carriers (102A), said optical modulator (104), and said optical multiplexer (108) are all disposed in said second temperature-controlled vessel (205).

9. The quantum computer according to claim 6,
wherein said refrigeration system (202) further comprises a second temperature-controlled vessel (205) to be controlled at a temperature higher than a temperature in the temperature-controlled vessel (204), and
wherein said optical demultiplexer (110) and said demodulator (112) are disposed in said second temperature-controlled vessel (205).

10. A method of controlling qubits in a quantum computer (200), the quantum computer (200) comprising a quantum processor (206), the quantum processor (206) comprising a plurality of superconducting qubits (116, 208), the method comprising:
modulating each of a plurality of qubit control signals (106A) onto a respective one of a plurality of optical carriers (102A) to provide a plurality of modulated optical signals (108A), each optical carrier of said plurality of optical carriers (102A) being a different wavelength of light;
multiplexing said plurality of modulated optical signals (108A) onto an optical waveguide (109) to provide a wavelength division multiplexed optical signal (108B) to be transmitted through said optical waveguide (109);
demultiplexing said plurality of modulated optical signals (108A) from said wavelength division multiplexed optical signal (108B) after being transmitted through said optical waveguide (109) to recover said plurality of modulated optical signals;
demodulating said recovered plurality of modulated optical signals (108A) to recover said plurality of qubit control signals (106A), wherein demodulating comprises a direct optical to electrical converting;
coupling each recovered qubit control signal (106B) from said plurality of recovered qubit control signals (106B) after said demodulating into at least one of a plurality of spatially separated qubit-control waveguides (111) such that equivalent qubit control signals (106B) are spatially divided into different qubit-control waveguides (111); and
directing recovered qubit control signals (106B) from each spatially separated qubit-control waveguide (111) to a different subset (116A) the plurality of superconducting qubits (116, 208),
wherein said plurality of qubit control signals (106A) and corresponding said plurality of recovered qubit control signals (106B) are in radio frequency (RF) wavelength ranges corresponding to an excitation energy of a corresponding qubit to be controlled;
receiving, by a radio frequency multiplexer/demultiplexer (114) including one or more bandpass filters (114B), the plurality of recovered qubit control signals (106B) transmitted via the spatially separated qubit-control waveguides (111) and outputting, by the radio frequency multiplexer/demultiplexer (114), frequency filtered recovered qubit control signals (114A) which are used to control the corresponding subset (116A) of the plurality of superconducting qubits (116, 208),
wherein each of the one or more bandpass filters (114B) includes an LC circuit to provide an LC bandpass filter.

11. The method according to the preceding claim, wherein said modulating and said multiplexing are performed at a higher temperature than said demultiplexing, said demodulating, said coupling and said directing.

12. The method according to any of the two preceding claims, wherein at least one of said demultiplexing, said demodulating, said coupling and said directing is performed at an operating temperature of said plurality of superconducting qubits.

13. The method according to claim 11, wherein each of said plurality of superconducting qubits has a control signal in the radio frequency (RF) spectral range, said qubit-control waveguides being RF waveguides, and wherein said demodulating, said coupling and said directing are performed at an operating superconducting temperature of said plurality of superconducting qubits (116, 208).

## Patentansprüche

1. Qubit-Steuersystem (100) für einen Quantencomputer (200), wobei der Quantencomputer (200) einen Quantenprozessor (206) umfasst, wobei der Quantenprozessor (206) eine Vielzahl von supraleitenden Qubits (116, 208) umfasst, wobei das Qubit-Steuersystem (100) umfasst:
eine Quelle einer Vielzahl von optischen Trägern (102A), wobei jeder optische Träger eine unterschiedliche Wellenlänge von Licht aufweist;
einen optischen Modulator (104), der ausgebildet ist, die Vielzahl von optischen Trägern (102A) aufzunehmen und jeden optischen Träger mit einem Qubit-Steuersignal (106A) zu modulieren, um eine Vielzahl von modulierten optischen Signalen (108A) bereitzustellen;
einen optischen Multiplexer (108), der ausgebildet ist, die Vielzahl von modulierten optischen Signalen (108A) zu empfangen und ein wellenlängenmultiplexiertes optisches Signal (108B) bereitzustellen;
einen optischen Wellenleiter (109), der optisch an den optischen Multiplexer (108) gekoppelt ist, um das wellenlängenmultiplexierte optische Signal (108B) zu empfangen und dadurch zu übertragen;
einen optischen Demultiplexer (110), der optisch an den optischen Wellenleiter (109) gekoppelt ist, um das wellenlängenmultiplexierte optische Signal (108B) nach der Übertragung durch den optischen Wellenleiter (109) zu empfangen, um jedes aus der Vielzahl von modulierten optischen Signalen (108A) zurückzugewinnen;
einen Demodulator (112), der optisch an den optischen Demultiplexer (110) gekoppelt ist, um jedes der zurückgewonnenen Vielzahl von modulierten optischen Signalen (108A) zu empfangen, um eine entsprechende Vielzahl von zurückgewonnenen Qubit-Steuersignalen (106B) auszugeben, wobei der Demodulator (112) einen direkten optoelektrischen Wandler umfasst;
eine Vielzahl von räumlich getrennten Qubit-Steuerwellenleitern (111), die jeweils ausgebildet sind, mindestens eines aus der Vielzahl von zurückgewonnenen Qubit-Steuersignalen (106B) zu empfangen, sodass äquivalente zurückgewonnene Qubit-Steuersignale (106B) räumlich in unterschiedliche räumlich getrennte Qubit-Steuerwellenleiter (111) aufgeteilt werden,
wobei jeder aus der Vielzahl von räumlich getrennten Qubit-Steuerwellenleitern (111) zurückgewonnene Qubit-Steuersignale (106B) zu einer unterschiedlichen Teilmenge (116A) aus der Vielzahl von supraleitenden Qubits (116, 208) leitet, und
wobei die Vielzahl von Qubit-Steuersignalen (106A) und entsprechend die Vielzahl von zurückgewonnenen Qubit-Steuersignalen (106B) in Radiofrequenz- (RF-) Wellenlängenbereichen liegen, die einer Anregungsenergie eines entsprechenden zu steuernden Qubits entsprechen,
wobei das Qubit-Steuersystem (100) weiter einen Radiofrequenz-Multiplexer/- Demultiplexer (114), einschließlich eines oder mehrerer Bandpassfilter (114B), umfasst, wobei der Radiofrequenz-Multiplexer/-Demultiplexer (114) ausgebildet ist, die Vielzahl von zurückgewonnenen Qubit-Steuersignalen (106B), die über die räumlich getrennten Qubit-Steuerwellenleiter (111) übertragen werden, zu empfangen und frequenzgefilterte zurückgewonnene Qubit-Steuersignale (114A) auszugeben, die verwendet werden, um die entsprechende Teilmenge (116A) aus der Vielzahl von supraleitenden Qubits (116, 208) zu steuern,
wobei jeder des einen oder mehreren Bandpassfilter (114B) eine LC-Schaltung einschließt, um einen LC-Bandpassfilter bereitzustellen.

2. Qubit-Steuersystem nach Anspruch 1, wobei der Radiofrequenz-Multiplexer/- Demultiplexer (114) ausgebildet ist, mindestens zwei zurückgewonnene Qubit-Steuersignale (106B), die unterschiedliche RF-Wellenlängen von dem Demodulator (112) aufweisen, zu empfangen und die mindestens zwei zurückgewonnenen Qubit-Steuersignale (106B) auf einen aus der Vielzahl von räumlich getrennten Qubit-Steuerwellenleitern (111) zu multiplexen.

3. Qubit-Steuersystem nach Anspruch 1, weiter umfassend eine Vielzahl von Radiofrequenz-Multiplexern/-Demultiplexern (114), die jeweils ausgebildet sind, mindestens zwei zurückgewonnene Qubit-Steuersignale (106B), die unterschiedliche RF-Wellenlängen von dem Demodulator (112) aufweisen, zu empfangen und die mindestens zwei zurückgewonnenen Qubit-Steuersignale (106B) auf einen entsprechenden aus der Vielzahl von räumlich getrennten Qubit-Steuerwellenleitern (111) zu multiplexen.

4. Qubit-Steuersystem nach Anspruch 2, wobei der Radiofrequenz-Multiplexer/- Demultiplexer (114) eine Vielzahl von Bandpassfiltern (114B) umfasst, die jeweils ein entsprechendes zurückgewonnenes Qubit-Steuersignal (106B) durchlassen, während alle anderen zurückgewonnenen Qubit-Steuersignale (106B) gedämpft oder im Wesentlichen blockiert werden.

5. Quantencomputer, umfassend:
ein Kühlsystem (202), das einen temperaturgeregelten Behälter (204) umfasst;
einen Quantenprozessor (206), der innerhalb des temperaturgeregelten Behälters (204) angeordnet ist, wobei der Quantenprozessor (206) eine Vielzahl von supraleitenden Qubits (116, 208) umfasst; und
ein Qubit-Steuersystem (210) nach einem der vorstehenden Ansprüche, das einen Teil (210A) außerhalb des temperaturgeregelten Behälters (204) und einen Teil (210B) aufweist, der sich in den temperaturgeregelten Behälter (204) erstreckt, um die Steuerung der Vielzahl von supraleitenden Qubits (116, 208) bereitzustellen.

6. Quantencomputer nach dem vorstehenden Anspruch, wobei die Quelle der Vielzahl von optischen Trägern (102A), der optische Modulator (104) und der optische Multiplexer (108) alle außerhalb des temperaturgeregelten Behälters (204) angeordnet sind,
wobei der optische Demultiplexer (110) und der Demodulator (112) innerhalb des temperaturgeregelten Behälters (204) angeordnet sind, und
wobei sich der optische Wellenleiter (109) von dem optischen Multiplexer (108), der außerhalb des temperaturgeregelten Behälters (204) angeordnet ist, in den temperaturgeregelten Behälter (204) zu dem optischen Demultiplexer (110) erstreckt.

7. Quantencomputer nach dem vorstehenden Anspruch, wobei das Kühlsystem (202) weiter einen zweiten temperaturgeregelten Behälter (205) umfasst, der auf eine Temperatur geregelt wird, die höher ist als eine Temperatur in dem temperaturgeregelten Behälter (204), und
wobei mindestens eines aus der Quelle der Vielzahl von optischen Trägern (102A), dem optischen Modulator (104) und dem optischen Multiplexer (108) in dem zweiten temperaturgeregelten Behälter (205) angeordnet ist.

8. Quantencomputer nach dem vorstehenden Anspruch, wobei die Quelle der Vielzahl von optischen Trägern (102A), der optische Modulator (104) und der optische Multiplexer (108) alle in dem zweiten temperaturgeregelten Behälter (205) angeordnet sind.

9. Quantencomputer nach Anspruch 6, wobei das Kühlsystem (202) weiter einen zweiten temperaturgeregelten Behälter (205) umfasst, der auf eine Temperatur geregelt wird, die höher ist als eine Temperatur in dem temperaturgeregelten Behälter (204), und
wobei der optische Demultiplexer (110) und der Demodulator (112) in dem zweiten temperaturgeregelten Behälter (205) angeordnet sind.

10. Verfahren zum Steuern von Qubits in einem Quantencomputer (200), wobei der Quantencomputer (200) einen Quantenprozessor (206) umfasst, wobei der Quantenprozessor (206) eine Vielzahl von supraleitenden Qubits (116, 208) umfasst,
wobei das Verfahren Folgendes umfasst:
Modulieren jedes einzelnen aus einer Vielzahl von Qubit-Steuersignalen (106A) auf einen jeweiligen optischen Träger aus einer Vielzahl von optischen Trägern (102A), um eine Vielzahl von modulierten optischen Signalen (108A) bereitzustellen, wobei jeder optische Träger aus der Vielzahl von optischen Trägern (102A) eine unterschiedliche Wellenlänge von Licht aufweist;
Multiplexen der Vielzahl von modulierten optischen Signalen (108A) auf einen optischen Wellenleiter (109), um ein wellenlängenmultiplexiertes optisches Signal (108B) bereitzustellen, das durch den optischen Wellenleiter (109) übertragen werden soll;
Demultiplexen der Vielzahl von modulierten optischen Signalen (108A) von dem wellenlängenmultiplexierten optischen Signal (108B) nach der Übertragung durch den optischen Wellenleiter (109), um die Vielzahl von modulierten optischen Signalen zurückzugewinnen;
Demodulieren der zurückgewonnenen Vielzahl von modulierten optischen Signalen (108A), um die Vielzahl von Qubit-Steuersignalen (106A) zurückzugewinnen, wobei das Demodulieren ein direktes optoelektrisches Umwandeln umfasst;
Koppeln jedes zurückgewonnenen Qubit-Steuersignals (106B) aus der Vielzahl von zurückgewonnenen Qubit-Steuersignalen (106B) nach dem Demodulieren in mindestens einen aus einer Vielzahl von räumlich getrennten Qubit-Steuerwellenleitern (111), sodass äquivalente Qubit-Steuersignale (106B) räumlich in unterschiedliche Qubit-Steuerwellenleiter (111) aufgeteilt werden; und
Leiten von zurückgewonnenen Qubit-Steuersignalen (106B) von jedem räumlich getrennten Qubit-Steuerwellenleiter (111) zu einer unterschiedlichen Teilmenge (116A) der Vielzahl von supraleitenden Qubits (116, 208),
wobei die Vielzahl von Qubit-Steuersignalen (106A) und entsprechend die Vielzahl von zurückgewonnenen Qubit-Steuersignalen (106B) in Radiofrequenz- (RF-) Wellenlängenbereichen liegen, die einer Anregungsenergie eines entsprechenden zu steuernden Qubits entsprechen;
Empfangen der Vielzahl von zurückgewonnenen Qubit-Steuersignalen (106B), die über die räumlich getrennten Qubit-Steuerwellenleiter (111) übertragen werden, durch einen Radiofrequenz-Multiplexer/-Demultiplexer (114) einschließlich eines oder mehrerer Bandpassfilter (114B), und Ausgeben von frequenzgefilterten zurückgewonnenen Qubit-Steuersignalen (114A), die verwendet werden, um die entsprechende Teilmenge (116A) der Vielzahl von supraleitenden Qubits (116, 208) zu steuern, durch den Radiofrequenz-Multiplexer/-Demultiplexer (114),
wobei jeder des einen oder mehreren Bandpassfilter (114B) eine LC-Schaltung einschließt, um einen LC-Bandpassfilter bereitzustellen.

11. Verfahren nach dem vorstehenden Anspruch, wobei das Modulieren und das Multiplexen bei einer höheren Temperatur durchgeführt werden als das Demultiplexen, das Demodulieren, das Koppeln und das Leiten.

12. Verfahren nach einem der zwei vorstehenden Ansprüche, wobei mindestens eines von dem Demultiplexen, dem Demodulieren, dem Koppeln und dem Leiten bei einer Betriebstemperatur der Vielzahl von supraleitenden Qubits durchgeführt wird.

13. Verfahren nach Anspruch 11, wobei jedes aus der Vielzahl von supraleitenden Qubits ein Steuersignal im Radiofrequenz- (RF-) Spektralbereich aufweist, wobei die Qubit-Steuerwellenleiter RF-Wellenleiter sind, und wobei das Demodulieren, das Koppeln und das Leiten bei einer supraleitenden Betriebstemperatur der Vielzahl von supraleitenden Qubits (116, 208) durchgeführt werden.

## Revendications

1. Système (100) de commande de bits quantiques pour un ordinateur quantique (200), l'ordinateur quantique (200) comprenant un processeur quantique (206), le processeur quantique (206) comprenant une pluralité de bits quantiques supraconducteurs (116, 208), le système (100) de commande de bits quantiques comprenant :
une source d'une pluralité de porteuses optiques (102A), chaque porteuse optique étant une longueur d'onde de lumière différente ;
un modulateur optique (104) configuré pour recevoir ladite pluralité de porteuses optiques (102A) et pour moduler chaque porteuse optique avec un signal (106A) de commande de bits quantiques pour fournir une pluralité de signaux optiques modulés (108A) ;
un multiplexeur optique (108) configuré pour recevoir ladite pluralité de signaux optiques modulés (108A) et fournir un signal optique multiplexé par répartition en longueur d'onde (108B) ;
un guide d'onde optique (109) couplé optiquement audit multiplexeur optique (108) pour recevoir et transmettre, par l'intermédiaire de celui-ci, ledit signal optique multiplexé par répartition en longueur d'onde (108B) ;
un démultiplexeur optique (110) couplé optiquement audit guide d'onde optique (109) pour recevoir ledit signal optique multiplexé par répartition en longueur d'onde (108B) après sa transmission par l'intermédiaire dudit guide d'onde optique (109) afin de récupérer chacun de ladite pluralité de signaux optiques modulés (108A) ;
un démodulateur (112) couplé optiquement audit démultiplexeur optique (110) pour recevoir chacun de ladite pluralité de signaux optiques modulés (108A) récupérés afin de délivrer une pluralité correspondante de signaux (106B) de commande de bits quantiques récupérés, dans lequel le démodulateur (112) comprend un convertisseur direct optique-électrique ;
une pluralité de guides d'onde (111) de commande de bits quantiques spatialement séparés, chacun étant configuré pour recevoir au moins un de ladite pluralité de signaux (106B) de commande de bits quantiques récupérés de telle sorte que des signaux (106B) de commande de bits quantiques récupérés équivalents sont divisés spatialement en différents guides d'onde (111) de commande de bits quantiques spatialement séparés,
dans lequel chacun de ladite pluralité de guides d'onde (111) de commande de bits quantiques spatialement séparés achemine les signaux (106B) de commande de bits quantiques récupérés vers un sous-ensemble différent (116A) de la pluralité de bits quantiques supraconducteurs (116, 208), et
dans lequel ladite pluralité de signaux (106A) de commande de bits quantiques et ladite pluralité correspondante de signaux (106B) de commande de bits quantiques récupérés sont dans des plages de longueurs d'onde radiofréquence (RF) correspondant à une énergie d'excitation d'un bit quantique correspondant à commander,
le système (100) de commande de bits quantiques comprenant en outre un multiplexeur/démultiplexeur radiofréquence (114) incluant un ou plusieurs filtres passe-bande (114B), le multiplexeur/démultiplexeur radiofréquence (114) étant configuré pour recevoir la pluralité de signaux (106B) de commande de bits quantiques récupérés transmis via les guides d'onde (111) de commande de bits quantiques spatialement séparés et pour délivrer des signaux (114A) de commande de bits quantiques récupérés filtrés en fréquence qui sont utilisés pour commander le sous-ensemble correspondant (116A) de la pluralité de bits quantiques supraconducteurs (116, 208),
dans lequel chacun des un ou plusieurs filtres passe-bande (114B) inclut un circuit LC pour fournir un filtre passe-bande LC.

2. Système de commande de bits quantiques selon la revendication 1, dans lequel le multiplexeur/démultiplexeur radiofréquence (114) est configuré pour recevoir au moins deux signaux (106B) de commande de bits quantiques récupérés, qui sont des longueurs d'onde RF différentes, en provenance dudit démodulateur (112) et pour multiplexer lesdits au moins deux signaux (106B) de commande de bits quantiques récupérés sur l'un de ladite pluralité de guides d'onde (111) de commande de bits quantiques spatialement séparés.

3. Système de commande de bits quantiques selon la revendication 1, comprenant en outre une pluralité de multiplexeurs/démultiplexeurs radiofréquence (114), chacun étant configuré pour recevoir au moins deux signaux (106B) de commande de bits quantiques récupérés, qui sont des longueurs d'onde RF différentes, en provenance dudit démodulateur (112) et pour multiplexer lesdits au moins deux signaux (106B) de commande de bits quantiques récupérés sur un guide correspondant de ladite pluralité de guides d'onde (111) de commande de bits quantiques spatialement séparés.

4. Système de commande de bits quantiques selon la revendication 2, dans lequel ledit multiplexeur/démultiplexeur radiofréquence (114) comprend une pluralité de filtres passe-bande (114B), chacun laissant passer un signal (106B) de commande de bits quantiques récupéré correspondant tout en atténuant ou en bloquant sensiblement tous les autres signaux (106B) de commande de bits quantiques récupérés.

5. Ordinateur quantique comprenant :
un système de réfrigération (202) comprenant une enceinte (204) à température régulée ;
un processeur quantique (206) disposé à l'intérieur de ladite enceinte (204) à température régulée, ledit processeur quantique (206) comprenant une pluralité de bits quantiques supraconducteurs (116, 208) ; et
un système (210) de commande de bits quantiques selon l'une quelconque des revendications précédentes présentant une partie (210A) extérieure à ladite enceinte (204) à température régulée et une partie (210B) s'étendant dans ladite enceinte (204) à température régulée pour fournir une commande de ladite pluralité de bits quantiques supraconducteurs (116, 208).

6. Ordinateur quantique selon la revendication précédente, dans lequel ladite source de ladite pluralité de porteuses optiques (102A), ledit modulateur optique (104) et ledit multiplexeur optique (108) sont tous disposés à l'extérieur de ladite enceinte (204) à température régulée,
dans lequel ledit démultiplexeur optique (110) et ledit démodulateur (112) sont disposés à l'intérieur de ladite enceinte (204) à température régulée, et
dans lequel ledit guide d'onde optique (109) s'étend depuis ledit multiplexeur optique (108) qui est disposé à l'extérieur de ladite enceinte (204) à température régulée jusque dans ladite enceinte (204) à température régulée jusqu'audit démultiplexeur optique (110).

7. Ordinateur quantique selon la revendication précédente, dans lequel ledit système de réfrigération (202) comprend en outre une deuxième enceinte (205) à température régulée devant être régulée à une température supérieure à une température dans l'enceinte (204) à température régulée, et
dans lequel au moins un parmi ladite source de ladite pluralité de porteuses optiques (102A), ledit modulateur optique (104) et ledit multiplexeur optique (108) est disposé dans ladite deuxième enceinte (205) à température régulée.

8. Ordinateur quantique selon la revendication précédente, dans lequel ladite source de ladite pluralité de porteuses optiques (102A), ledit modulateur optique (104) et ledit multiplexeur optique (108) sont tous disposés dans ladite deuxième enceinte (205) à température régulée.

9. Ordinateur quantique selon la revendication 6, dans lequel ledit système de réfrigération (202) comprend en outre une deuxième enceinte (205) à température régulée devant être régulée à une température supérieure à une température dans l'enceinte (204) à température régulée, et
dans lequel ledit démultiplexeur optique (110) et ledit démodulateur (112) sont disposés à l'intérieur de ladite deuxième enceinte (205) à température régulée.

10. Procédé de commande de bits quantiques dans un ordinateur quantique (200), l'ordinateur quantique (200) comprenant un processeur quantique (206), le processeur quantique (206) comprenant une pluralité de bits quantiques supraconducteurs (116, 208),
le procédé comprenant :
la modulation de chacun d'une pluralité de signaux (106A) de commande de bits quantiques sur une porteuse respective d'une pluralité de porteuses optiques (102A) pour fournir une pluralité de signaux optiques modulés (108A), chaque porteuse optique de ladite pluralité de porteuses optiques (102A) étant une longueur d'onde de lumière différente ;
le multiplexage de ladite pluralité de signaux optiques modulés (108A) sur un guide d'onde optique (109) pour fournir un signal optique multiplexé par répartition en longueur d'onde (108B) devant être transmis par l'intermédiaire dudit guide d'onde optique (109) ;
le démultiplexage de ladite pluralité de signaux optiques modulés (108A) depuis ledit signal optique multiplexé par répartition en longueur d'onde (108B) après sa transmission par l'intermédiaire dudit guide d'onde optique (109) afin de récupérer ladite pluralité de signaux optiques modulés ;
la démodulation de ladite pluralité de signaux optiques modulés (108A) récupérés afin de récupérer ladite pluralité de signaux (106A) de commande de bits quantiques, dans lequel la démodulation comprend une conversion directe optique-électrique ;
le couplage de chaque signal (106B) de commande de bits quantiques récupéré de ladite pluralité de signaux (106B) de commande de bits quantiques récupérés après ladite démodulation dans au moins un d'une pluralité de guides d'onde (111) de commande de bits quantiques spatialement séparés de telle sorte que des signaux (106B) de commande de bits quantiques équivalents sont divisés spatialement en différents guides d'onde (111) de commande de bits quantiques ; et
l'acheminement des signaux (106B) de commande de bits quantiques récupérés depuis chaque guide d'onde (111) de commande de bits quantiques spatialement séparé vers un sous-ensemble différent (116A) de la pluralité de bits quantiques supraconducteurs (116, 208),
dans lequel ladite pluralité de signaux (106A) de commande de bits quantiques et la pluralité correspondante de signaux (106B) de commande de bits quantiques récupérés sont dans des plages de longueurs d'onde radiofréquence (RF) correspondant à une énergie d'excitation d'un bit quantique correspondant à commander ;
la réception, par un multiplexeur/démultiplexeur radiofréquence (114) incluant un ou plusieurs filtres passe-bande (114B), de la pluralité de signaux (106B) de commande de bits quantiques récupérés transmis par l'intermédiaire des guides d'onde (111) de commande de bits quantiques spatialement séparés et la sortie, par le multiplexeur/démultiplexeur radiofréquence (114), de signaux (114A) de commande de bits quantiques récupérés filtrés en fréquence qui sont utilisés pour commander le sous-ensemble correspondant (116A) de la pluralité de bits quantiques supraconducteurs (116, 208),
dans lequel chacun des un ou plusieurs filtres passe-bande (114B) inclut un circuit LC pour fournir un filtre passe-bande LC.

11. Procédé selon la revendication précédente, dans lequel ladite modulation et ledit multiplexage sont réalisés à une température plus élevée que celle dudit démultiplexage, de ladite démodulation, dudit couplage et dudit acheminement.

12. Procédé selon l'une quelconque des deux revendications précédentes, dans lequel au moins l'un parmi ledit démultiplexage, ladite démodulation, ledit couplage et ledit acheminement est réalisé à une température de fonctionnement de ladite pluralité de bits quantiques supraconducteurs.

13. Procédé selon la revendication 11, dans lequel chacun de ladite pluralité de bits quantiques supraconducteurs présente un signal de commande dans la plage spectrale radiofréquence (RF), lesdits guides d'onde de commande de bits quantiques étant des guides d'onde RF, et dans lequel ladite démodulation, ledit couplage et ledit acheminement sont réalisés à une température supraconductrice de fonctionnement de ladite pluralité de bits quantiques supraconducteurs (116, 208).
